# EUROPÄISCHE PATENTSCHRIFT

(11) **EP 1 081 783 B1**
(45) Veröffentlichungstag und Bekanntmachung des Hinweises auf die Patenterteilung: **27.09.2006**
(21) Anmeldenummer: 00115799.9
(22) Anmeldetag: 22.07.2000
(51) Int. Cl.: H01M 8/24, H01M 8/04, H01M 8/06

(54) **Brennstoffzellenteilsystem**
Fuel cell sub-system
Sous-système de piles à combustible

(30) Priorität: 02.09.1999 DE 19941711
(43) Veröffentlichungstag der Anmeldung: 07.03.2001
(73) Patentinhaber: NuCellSys GmbH, 73230 Kirchheim/Teck-Nabern (DE)
(72) Erfinder: Heuser, Ralf, 89075 Ulm (DE); Kaufmann, Lars, 73265 Dettingen/Teck (DE); Kaupmann, Paul, 73277 Owen/Teck (DE)
(74) Vertreter: Senft, Stefan Manfred

(56) Entgegenhaltungen:
- EP-A- 0 295 629
- CH-A- 600 598
- GB-A- 1 537 082
- US-A- 5 470 671

## Beschreibung

Die Erfindung betrifft ein Brennstoffzellenteilsystem mit einer mediengekühlten Brennstoffzelle nach dem Oberbegriff des Anspruchs 1.

Aus der US 5,470,671 ist eine Brennstoffzelle bekannt, welche mit Luft gekühlt wird. Die thermische Integration einer solchen Brennstoffzelle in ein Brennstoffzellensystem ist aufwendig, da viele Komponenten mit unterschiedlichen, jedoch genau einzuhaltenden Temperaturniveaus und unterschiedlichem Kühl- oder Heizbedarf zu berücksichtigen sind.

Die EP 0 295 629 A1 offenbart ein Kühlsystem für einen Brennstoffzellenstapel, bei dem in dem Brennstoffzellenstapel eine Kühlplatte angeordnet ist und ein Bereich des Brennstoffzellenstapels als Kondensationszone für aus einer Kathodenseite des Brennstoffzellenstapels austretende Kathodenabgase dient. Der Brennstoffzellenstapel wird durch ein mit Hilfe einer Pumpe über die Kühlplatte geleitetes Kühlmedium gekühlt.

Aus der CH 600 598 A5 ist eine Stromversorgungsanlage bekannt, die eine Brennstoffzelleneinheit, einen Verdichter, einen Kondensator sowie einen CO-Umwandler umfasst. Zur Kühlung des Kondensators wird Kühlluft über eine erste Leitung in den Kondensator eingeleitet und über eine zweite Leitung aus dem Kondensator abgeführt.

Der Erfindung liegt die Aufgabe zugrunde, ein einfach und kompakt aufgebautes Brennstoffzellenteilsystem anzugeben, bei dem eine Reinigung eines Reaktionsmedienstroms einer Brennstoffzelle möglich ist.

Die Aufgabe wird durch ein Brennstoffzellenteilsystem mit den im Anspruch 1 genannten Merkmalen gelöst.

Bei einem erfindungsgemäßen Brennstoffzellenteilsystem ist ein gemeinsames Fördermittel zur Einleitung von Kühlmedium in die Brennstoffzelle und einen Kondensator zur Kondensation von Wasser aus Kathodenabluft und in eine Kohlenmonoxid-Entfernungseinheit vorgesehen.

Der Vorteil liegt darin, dass zum einen eine sehr kompakte Bauweise ermöglicht wird, da die Komponenten direkt gekoppelt werden können. Das Bauvolumen wird minimiert und Druckverluste des Kühlmediums durch kurze Kühlstrecken verringert. Zum anderen wird zur Kühlung der Komponenten nur ein Fördermittel für das Kühlmedium benötigt, so dass die Zahl der Systemkomponenten verkleinert werden kann.

Weitere Vorteile und Ausgestaltungen der Erfindung ergeben sich aus der Beschreibung und der beiliegenden Zeichnung.

Es versteht sich, dass die in den abhängigen Ansprüchen genannten Merkmale nicht nur in der jeweils angegebenen Kombination, sondern auch in anderen Kombinationen im Zusammenhang mit den Merkmalen des unabhängigen Anspruchs 1 verwendbar sind, ohne den Rahmen der vorliegenden Erfindung zu verlassen.

Die Erfindung ist anhand eines Ausführungsbeispieles in der Zeichnung schematisch dargestellt und wird im folgenden unter Bezugnahme auf die Zeichnung ausführlich beschrieben. Es zeigen
- Fig. 1 a, b: eine schematische Darstellung zweier alternativer Anordnungen eines Fördermittels in einem erfindungsgemäßen Brennstoffzellenteilsystems, welches eine Brennstoffzelle, eine Selox-Einheit und einen Kondensator gemeinsam mit Kühlmedium versorgt,
- Fig. 2: eine schematische Darstellung einer erfindungsgemäßen Anordnung in einem Brennstoffzellenstapel und
- Fig. 3: eine schematische Darstellung einer Kühlmedienzufuhr in einem Brennstoffzellenstapel.

Brennstoffzellensysteme, etwa solche mit Brennstoffzellen mit Polymerelektrolytmembranen (PEM), benötigen üblicherweise einen Kondensator, in dem feuchte Kathodenabluft der Brennstoffzelle gekühlt und entfeuchtet wird. Das dabei gewonnene Wasser wird dem Wasserhaushalt des Systems wieder zugeführt, wo es zur Befeuchtung der Brennstoffzellenmembran oder einem Reformierungsprozess bei der Gaserzeugung im Brennstoffzellensystem zur Verfügung gestellt wird. Sowohl Brennstoffzelle als auch Kondensator können dabei mit gasförmigen oder auch mit flüssigen Kühlmedien, vorzugsweise Luft oder Wasser, gekühlt werden.

Als Brennstoffzelle wird hier sowohl eine einzelne Brennstoffzelle bezeichnet als auch ein Brennstoffzellenstapel mit einer Mehrzahl von Brennstoffzellen, die seriell und/oder parallel miteinander verschaltet sind, um Leistungen bereitstellen zu können, die z.B. für den Antrieb eines Fahrzeugs geeignet sind.

Des weiteren wird die Erfindung anhand einer luftgekühlten Brennstoffzelle erläutert. Zur Kühlung des erfindungsgemäßen Brennstoffzellenteilsystems sind jedoch auch andere Kühlmedien als Luft einsetzbar.

Bei einem erfindungsgemäßen bevorzugten Brennstoffzellenteilsystem wird vorteilhafterweise ein einziger Ventilator als Fördermittel für Kühlmedien verwendet, um den Luftstrom als Kühlmedium, den Ventilator als Bauteil an sich und die zum Betreiben des Ventilators notwendige elektrische Leistung optimal zu nutzen. Die verwendeten Fördermittel sind vorzugsweise Fördermittel zur Einleitung eines gasförmigen Kühlmediums geeignet, wie z.B. Lüfter, Kompressoren, Wankelmotoren und dergl.

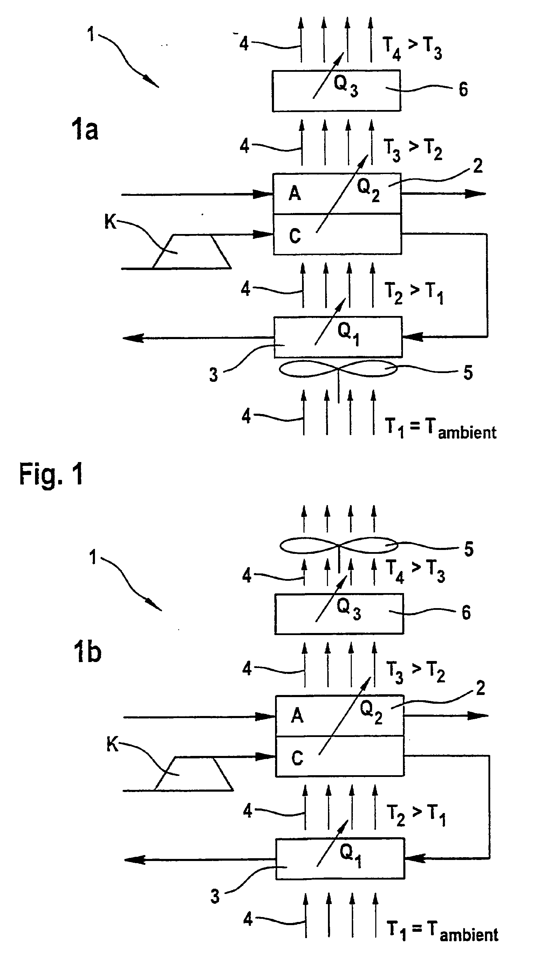

Fig. 1a zeigt eine bevorzugte Anordnung des erfindungsgemäßen Brennstoffzellenteilsystems 1, bei dem eine Brennstoffzelle 2 mit Anodenraum A und Kathodenraum C und ein Kondensator 3 mit einem Luftstrom 4 eines Ventilators 5 versorgt und gekühlt werden. Der Ventilator 5 ist zustromseitig von den zu kühlenden Elementen angeordnet.

Zusätzlich ist hier noch eine Kohlenmonoxid-Entfernungseinheit 6, vorzugsweise eine Einheit zur selektiven Entfernung von Kohlenmonoxid aus einem Reaktionsmedienstrom der Brennstoffzelle 2, in Bezug auf den Luftstrom abstromseitig der Brennstoffzelle 2 vorgesehen. Vor der Kathode C ist ein Verdichter, vorzugsweise ein Kompressor, angeordnet, der die Kathode C mit Prozeßluft versorgt. Weitere Versorgungsleitungen der Brennstoffzelle 2 zur Versorgung mit Reaktionsmedien, etwa Wasserstoffzufuhr zur Anode A und Sauerstoffzufuhr zur Kathode C, sowie zur Entsorgung der Reaktionsmedien, wie etwa der Kathodenabluft von der Kathode C zum Kondensator 3 sind durch Pfeile angedeutet, jedoch nicht weiter erläutert. Die Prozeßluft, welche zur Versorgung der Kathode C mit Sauerstoff vorgesehen ist, wird getrennt vom Luftstrom zur Kühlung der Anordnung geführt.

In Fig. 1b ist eine weitere bevorzugte Anordnung des erfindungsgemäßen Brennstoffzellenteilsystems 1 dargestellt, bei der der Ventilator 5 abstromseitig der zu kühlenden Elemente, hier der Brennstoffzelle 2 und der Kohlenmonoxid-Entfernungseinheit 6, angeordnet ist.

Zur Nutzung des niedrigen Temperaturniveaus der Umgebung wird der luftgekühlten Brennstoffzelle 2 ein Kondensator 3 vorgeschaltet, der Wasser aus der Kathodenabluft der Brennstoffzelle ausscheidet. Der Kondensator führt so nur eine geringe Wärmemenge Q₁ in das Kühlmedium 4 ein.

Die Eingangstemperatur des Kühlmediums 4 in den Kondensator 3 ist T₁ und entspricht vorzugsweise der Umgebungstemperatur T_{ambient}. Das Kühlmedium 4 verläßt den Kondensator mit der vorzugsweise geringfügig höheren Temperatur T₂.

Die geringe Temperaturerhöhung des Luftstroms 4 stört nicht, da Q₁ deutlich geringer ist als die Abwärme Q₂ der Brennstoffzelle, die in Stromrichtung des Kühlmediums 4 in der Brennstoffzelle anfällt. Das Kühlmedium 4 verläßt die Brennstoffzelle 2 mit der Temperatur T₃.

Im Kühlmedienstrom 4 abstromseits der Brennstoffzelle 2 kann ein weiteres zu kühlendes Element 6 angeordnet sein. Bevorzugt befindet sich dieses auf einem höheren Temperaturniveau als die Brennstoffzelle, so dass das Kühlmedium 4 noch den Wärmestrom Q3 abführen kann. Ein solches Element ist vorzugsweise eine Kohlenmonoxid-Entfernungseinheit, besonders bevorzugt eine Einheit zur selektiven Entfernung von Kohlenmonoxid aus einem Reformatstrom zur Versorgung der Brennstoffzelle.

Das Kühlmedium tritt mit der Temperatur T₃ in das Element 6 ein, führt dort die Wärmemenge Q₃ ab, und die Temperatur des Kühlmediums 4 steigt von T₃ auf T₄.

Die zu kühlenden Elemente 3, 2, 6 sind bezogen auf die Strömungsrichtung des Kühlmediums 4 mit ansteigendem Temperaturniveau angeordnet.

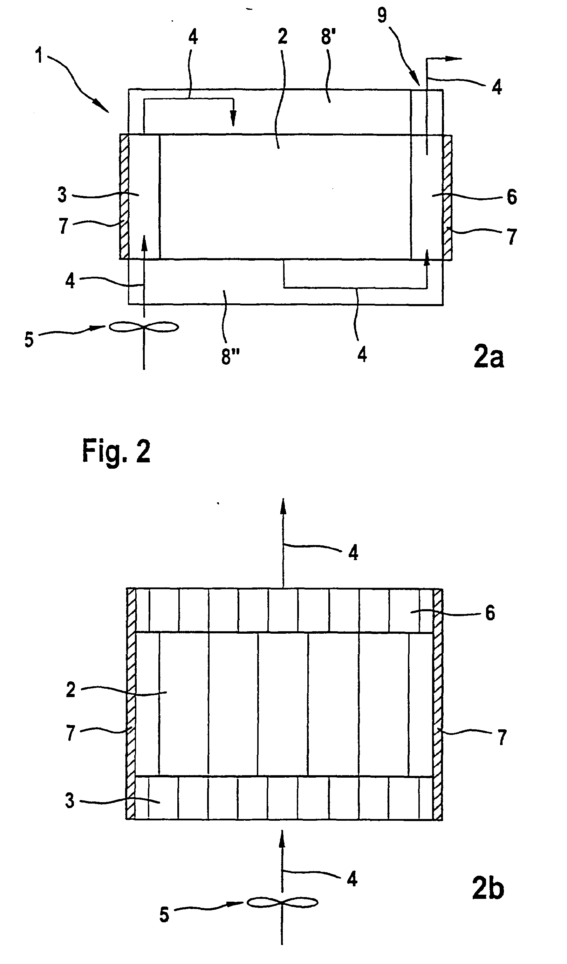

In Fig. 2 sind bevorzugte Ausführungen des erfindungsgemäßen Brennstoffzellenteilsystems dargestellt. Gleiche Elemente sind mit denselben Bezugszeichen wie in Fig. 1 bezeichnet. Die Brennstoffzelle ist hier durch einen Stapel von einzelnen Brennstoffzellen gebildet.

Fig. 2a zeigt eine besonders kompakte Anordnung. Der Kondensator 3 und die Kohlenmonoxid-Entfernungseinheit 6 sind innerhalb der Endplatten 7 und in Stapelrichtung der Brennstoffzelle 2 angeordnet; die Endplatten 7 schließen das Teilsystem nach außen ab. Dabei ist der Kondensator 3 und die Kohlenmonoxid-Entfernungseinheit 6 mit jeweils einer Endplatte 7 der Brennstoffzelle 2 verbunden. Das Kühlmedium 4 wird in Führungen 8', 8" geführt und in die Brennstoffzelle 2 verteilt, so dass das Kühlmedium parallel zu den Platten im Brennstoffzellenstapel strömt. Der Weg des Kühlmediums 4 ist mit Pfeilen angedeutet.

Das Kühlmedium 4 wird vom Ventilator 5 zum Kondensator 3 geführt und kühlt diesen. Das Kühlmedium 4 tritt vom Kondensator 3 in den Kühlmedien-Zuführkanal 8' ein, wird dort in die Brennstoffzelle 4 verteilt, kühlt diese und tritt aus der Brennstoffzelle 2 in den Kühlmedien-Abführkanal 8'' ein. Von dort strömt das Kühlmedium 4 in die Kohlenmonoxid-Entfernungseinheit 6, kühlt diese und verläßt das Brennstoffzellenteilsystem 1 am Ausgang 9 des Teilsystems.

Die Kohlenmonoxid-Entfernungseinheit 6 kann dabei einstufig oder mehrstufig ausgebildet sein.

In Fig. 2b ist eine weitere bevorzugte Ausbildung des erfindungsgemäßen Brennstoffzellenteilsystems dargestellt. Auch hier sind die zu kühlenden Elemente 3, 6 innerhalb der Endplatten 7 der Brennstoffzelle 2 angeordnet, jedoch senkrecht zur Stapelrichtung der Brennstoffzelle 2. Dabei ist der Kondensator 3 und die Kohlenmonoxid-Entfernungseinheit 6 jeweils mit beiden Endplatten 7 verbunden. Die Anordnung stellt ebenso wie die in Fig. 2a gezeigte Anordnung eine Plattenanordnung dar, bei der das Kühlmedium 4 parallel zu den Platten der Reaktionsräume strömt. Der Aufbau ist jedoch einfacher, da die Kühlmedien-Zuführ- und Abführkanäle 8', 8" hier entfallen können. Die Strömung des Kühlmediums 4 muß hier nicht wie in Fig. 2a umgelenkt werden.

Der Ventilator 5 ist hier wie in Fig. 2a zustromseitig bezogen auf die Luftströmung angeordnet und drückt das Kühlmedium in das Teilsystem. Er könnte jedoch auch abstromseitig des Teilsystems angeordnet sein und das Kühlmedium aus dem Teilsystem heraussaugen.

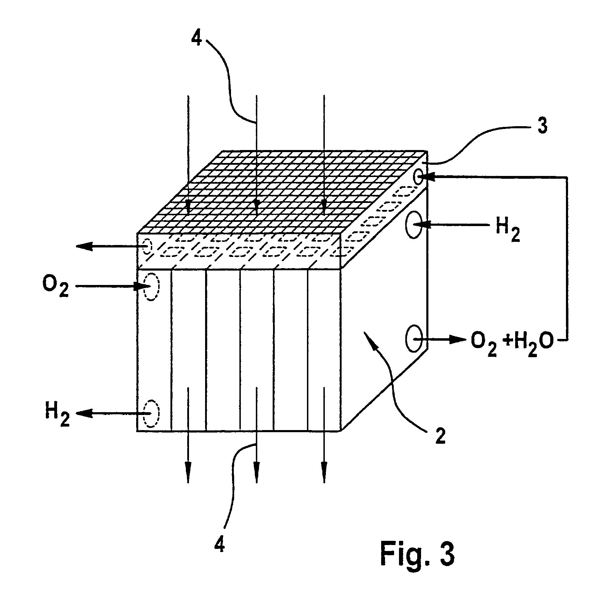

Fig. 3 zeigt schematisch den Strömungsverlauf von Kühlmedium 4 und Reaktionsmedien einer Brennstoffzelle 2. Das Brenngas ist pauschal als H₂, das oxidierende Medium als O₂ bezeichnet. Das Kathodenabgas ist als O₂+H₂O bezeichnet. Die genaue Zusammensetzung der Reaktionsmedien und Abgase hängt jedoch vom gewählten System ab.

Das Kühlmedium 4 strömt senkrecht zur Stapelrichtung, wobei das Kühlmedium 4 wiederum zuerst in den Kondensator 3 eintritt und dann die Brennstoffzelle 2 kühlt. Eine Kohlenmonoxid-Entfernungseinheit 6 ist hier nicht explizit dargestellt, kann jedoch vorgesehen sein. Das Kathodenabgas wird dem Kondensator 3 zur Entfeuchtung zugeführt.

Die gezeigte Medienführung ist hier nur beispielhaft dargestellt und soll keine Einschränkung der Erfindung bedeuten.

## Patentansprüche

1. Brennstoffzellenteilsystem, das eine mediengekühlte Brennstoffzelle (2) mit einem Anodenraum (A) und einem Kathodenraum (C), einen mediengekühlten Kondensator (3) zur Kondensation von Wasser aus Kathodenabluft und eine mediengekühlte Kohlenmonoxid-Entfernungseinheit (6) umfasst, wobei ein gemeinsames Fördermittel (5) zur Einleitung von Kühlmedium (4) in die Brennstoffzelle (2), in den Kondensator (3) und in die Kohlenmonoxid-Entfernungseinheit (6) vorgesehen ist.

2. Brennstoffzellenteilsystem nach Anspruch 1,
**dadurch gekennzeichnet, dass** bezogen auf die Strömungsrichtung des Kühlmediums (4) die zu kühlenden Elemente (3, 2, 6) mit ansteigendem Temperaturniveau angeordnet sind.

3. Brennstoffzellenteilsystem nach Anspruch 1,
**dadurch gekennzeichnet, dass** die Brennstoffzelle (2) und der Kondensator (3) in einem gemeinsamen Bauteil vereint sind.

4. Brennstoffzellenteilsystem nach Anspruch 1,
**dadurch gekennzeichnet, dass** die Kohlenmonoxid-Entfernungseinheit (6) zur selektiven Oxidation von Kohlenmonoxid vorgesehen ist.

5. Brennstoffzellenteilsystem nach Anspruch 1,
**dadurch gekennzeichnet, dass** das Fördermittel (5) zustromseits von gemeinsam zu kühlenden Elementen (3, 2, 6) angeordnet ist.

6. Brennstoffzellenteilsystem nach Anspruch 1,
**dadurch gekennzeichnet, dass** das Fördermittel (5) abstromseits von gemeinsam zu kühlenden Elementen (3, 2, 6) angeordnet ist.

7. Brennstoffzellenteilsystem nach Anspruch 1,
**dadurch gekennzeichnet, dass** das Fördermittel (5) zur Einleitung eines gasförmigen Kühlmediums (4) geeignet ist.

8. Brennstoffzellenteilsystem nach Anspruch 1,
**dadurch gekennzeichnet, dass** das Fördermittel (5) eine Pumpe zur Einleitung eines flüssigen Kühlmediums (4) ist.

9. Brennstoffzellenteilsystem nach Anspruch 1,
**dadurch gekennzeichnet, dass** innerhalb von Endplatten (7) eines Brennstoffzellenstapels (2) der Kondensator (3), der Brennstoffzellenstapel (2) und die Kohlenmonoxid-Entfernungseinheit (6) aufeinanderfolgend in Stapelrichtung der Brennstoffzelle (2) angeordnet sind.

10. Brennstoffzellenteilsystem nach Anspruch 1,
**dadurch gekennzeichnet, dass** innerhalb von Endplatten (7) eines Brennstoffzellenstapels (2) der Kondensator (3), der Brennstoffzellenstapel (2) und die Kohlenmonoxid-Entfernungseinheit (6) aufeinanderfolgend quer zur Stapelrichtung der Brennstoffzelle (2) angeordnet sind.

## Claims

1. Fuel cell subsystem which comprises a medium-cooled fuel cell (2) having an anode space (A) and a cathode space (C), a medium-cooled condenser (3) for condensing water out of cathode waste air and a medium-cooled carbon monoxide removal unit (6), a common delivery means (5) being provided for introducing cooling medium (4) into the fuel cell (2), into the condenser (3) and into the carbon monoxide removal unit (6).

2. Fuel cell subsystem according to Claim 1, **characterized in that** based on the direction of flow of the cooling medium (4), the elements (3, 2, 6) that are to be cooled are arranged with a rising temperature level.

3. The fuel cell subsystem as claimed in Claim 1, **characterized in that** the fuel cell (2) and the condenser (3) are combined in one common component.

4. Fuel cell subsystem according to Claim 1, **characterized in that** the carbon monoxide removal unit (6) is intended for the selective oxidation of carbon monoxide.

5. Fuel cell subsystem according to Claim 1, **characterized in that** the delivery means (5) is arranged on the inflow side of elements (3, 2, 6) which are to be cooled together.

6. Fuel cell subsystem according to Claim 1, **characterized in that** the delivery means (5) is arranged on the outflow side of elements (3, 2, 6) which are to be cooled together.

7. Fuel cell subsystem according to Claim 1, **characterized in that** the delivery means (5) is suitable for the introduction of a gaseous cooling medium (4).

8. The fuel cell subsystem as claimed in Claim 1, **characterized in that** the delivery means (5) is a pump for introducing a liquid cooling medium (4).

9. Fuel cell subsystem according to Claim 1, **characterized in that** within endplates (7) of a fuel cell stack (2), the condenser (3), the fuel cell stack (2) and the carbon monoxide removal unit (6) are arranged in succession in the stack direction of the fuel cell (2).

10. Fuel cell subsystem according to Claim 1, **characterized in that** within endplates (7) of a fuel cell stack (2), the condenser (3), the fuel cell stack (2) and the carbon monoxide removal unit (6) are arranged in succession transversely to the stack direction of the fuel cell (2).

## Revendications

1. Sous-système de pile à combustible, comprenant une pile à combustible (2) refroidie par fluide, avec un espace d'anode (A) et un espace de cathode (C), un condenseur (3) refroidi par fluide pour la condensation de l'eau provenant de l'air évacué de la cathode et une unité d'élimination de monoxyde de carbone (6) refroidie par fluide, un moyen de transport commun (5) étant prévu pour introduire du fluide de refroidissement (4) dans la pile à combustible (2), dans le condenseur (3) et dans l'unité d'élimination de monoxyde de carbone (6).

2. Sous-système de pile à combustible selon la revendication 1, **caractérisé en ce que** par rapport au sens d'écoulement du fluide de refroidissement (4), les éléments à refroidir (3, 2, 6) sont disposés avec un niveau de température croissant.

3. Sous-système de pile à combustible selon la revendication 1,
**caractérisé en ce que** la pile à combustible (2) et le condenseur (3) sont réunis dans un composant commun.

4. Sous-système de pile à combustible selon la revendication 1,
**caractérisé en ce que** l'unité d'élimination de monoxyde de carbone (6) est prévue pour l'oxydation sélective du monoxyde de carbone.

5. Sous-système de pile à combustible selon la revendication 1,
**caractérisé en ce que** le moyen de transport (5) est disposé du côté amont des éléments (3, 2, 6) à refroidir en commun.

6. Sous-système de pile à combustible selon la revendication 1,
**caractérisé en ce que** le moyen de transport (5) est du côté aval des éléments (3, 2, 6) à refroidir en commun.

7. Sous-système de pile à combustible selon la revendication 1,
**caractérisé en ce que** le moyen de transport (5) est approprié pour l'introduction d'un fluide de refroidissement gazeux (4).

8. Sous-système de pile à combustible selon la revendication 1,
**caractérisé en ce que** le moyen de transport (5) est une pompe pour l'introduction d'un fluide de refroidissement liquide (4).

9. Sous-système de pile à combustible selon la revendication 1,
**caractérisé en ce qu'**à l'intérieur de plaques d'extrémité (7) d'un empilement de piles à combustibles (2), le condenseur (3), l'empilement de piles à combustibles (2) et l'unité d'élimination de monoxyde de carbone (6) sont disposés les uns derrière les autres dans le sens de l'empilement de la pile à combustible (2).

10. Sous-système de pile à combustible selon la revendication 1,
**caractérisé en ce qu'**à l'intérieur de plaques d'extrémité (7) d'un empilement de piles à combustibles (2), le condenseur (3), l'empilement de piles à combustibles (2) et l'unité d'élimination de monoxyde de carbone (6) sont disposés les uns derrière les autres transversalement au sens de l'empilement de la pile à combustible (2).
